## Europäisches Patentamt

## European Patent Office

## Office européen des brevets

(19)

(11) Veröffentlichungsnummer: **0 047 428**
A1

# EUROPÄISCHE PATENTANMELDUNG

(12)

(21) Anmeldenummer: 81106610.9

(22) Anmeldetag: 26.08.81

(51) Int. Cl.³: **C 08 G 65/44**

(30) Priorität: 09.09.80 DE 3033813

(43) Veröffentlichungstag der Anmeldung: 17.03.82
Patentblatt 82/11

(84) Benannte Vertragsstaaten: **BE DE FR GB NL**

(71) Anmelder: **BASF Aktiengesellschaft,
Carl-Bosch-Strasse 38, D-6700 Ludwigshafen (DE)**

(72) Erfinder: **Naarmann, Herbert, Dr., Haardtblick 15,
D-6719 Wattenhelm (DE)**
Erfinder: **Brandstetter, Franz, Dr., Ritterbuechel 45,
D-6730 Neustadt (DE)**
Erfinder: **Haaf, Franz, Dr., Leistadter Strasse 9,
D-6702 Bad Duerkheim (DE)**
Erfinder: **Schuster, Hans, H., Dr., Luitpoldstrasse 166,
D-6700 Ludwigshafen (DE)**

(54) **Verfahren zur Herstellung von Polyphenylenäthern.**

(57) Verfahren zur Herstellung hochmolekularer Polyphenylenäther aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25 °C in Anwesenheit eines Katalysatorkomplexes aus einem Kupfersalz und einem organischen Amin in Gegenwart eines aromatischen $C_8$- bis $C_{10}$-Kohlenwasserstoffs, insbesondere Ethylbenzol, im Bereich von 1 : 1 bis 20 : 1 Gewichtsteilen.

EP 0 047 428 A1

BASF Aktiengesellschaft

Verfahren zur Herstellung von Polyphenylenäthern

Die Erfindung betrifft ein Verfahren zur Herstellung hochmolekularer Polyphenylenäthern aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und einem geradkettigen aliphatischen Amin sowie einem niedermolekularen Alkylalkohol durchzuführen (vgl. US-PS 3 661 848 oder DE-AS 20 11 709). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Dieser bisher ausgeübte Reaktionsweg weist den Nachteil auf, daß nur mit Monomeren hoher Reinheit gearbeitet werden kann.

Fre/P

BAD ORIGINAL

0047428
O.Z. 0050/034652

Wird z.B. nach DE-AS 20 11 709, Beispiel 1 in Toluol polymerisiert, so ist ein 2,6-Dimethylphenol einzusetzen, dessen Reinheit mindestens 99 % beträgt, um die dort angegebene Intrinsic-Viskosität von $[\eta]$ = 0,46 dl/g zu erreichen.

Wird z.B. ein 2,6-Dimethylphenol verwendet mit einer Reinheit $<$ 99 %, das z.B. 0,4 % m-Kresol, 0,01 % p-Kresol, 0,8 % o-Kresol und 0,5 % andere Verunreinigungen enthält (Rohmonomer), so wird unter vergleichbaren Bedingungen in Toluol ein Polymers mit einer Intinsic-Viskosität von nur $[\eta]$ = 0,35 dl/g erhalten.

Der Erfindung lag die Aufgabe zugrunde, bei Verwendung von Rohmonomeren durch Abändern der Polymerisationsbedingungen Polymere mit hohen Intrinsic-Viskositäten zu erhalten.

Diese Aufgabe wird erfindungsgemäß dadurch gelöst, daß als Lösungsmittel ein aromatischer $C_8$- bis $C_{10}$-Kohlenwasserstoff verwendet wird. Bevorzugte Kohlenwasserstoffverbindung ist das Ethylbenzol.

Unter hochmolekularen Polyphenylenäthern werden die durch oxidative Kupplung von 2,6-Dialkylphenolen zu einer Kette alkylsubstituierter, in para-Stellung durch Sauerstoffatome ätherartig gebundene Benzolringe verstanden. Die Polymeren weisen Molekulargewichte von 5 000 bis 30 000, bevorzugt 10 000 bis 25 000, bestimmt nach der in "Macromolecular Syntheses" 1 (1978), Seite 83 beschriebenen Methode, auf. Hochmolekulare Polyphenylenäther, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der hochmolekularen Polyphenylenäther verwendeten einwertigen Phenole, die in den beiden ortho--Stellungen, nicht aber in der para-Stellung Alkylsubstituenten aufweisen, sind übliche Phenole wie 2,6-Dimethylphenol, 2,6-Diäthylphenol, 2-Methyl-6-äthylphenyl, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist.

Bei dem für die Polykondensation bekannten Katalysatorkomplex handelt es sich um eine Kombination aus einem Amin, z.B. Dibutylamin, Diäthylamin, Picolin, Chinolin, Pyridinbasen, Triisopropylamin, Dimethylisopropanolamin, Triäthanolamin, Triisopropanolamin oder Diisopropanolamin mit einem Kupfersalz, wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt von 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen am Lösungsmittel, bezogen auf das Monomere.

Darüberhinaus kann die Reaktionsmischung einen Aktivator wie ein Diarylguanidin oder ein Diarylformamidin enthalten (vgl. US-PS 3 544 515).

Nach erfindungsgemäßem Verfahren soll als Lösungsmittel ein aromatischer $C_8$- bis $C_{10}$-Kohlenwasserstoff verwendet werden. Geeignete Kohlenwasserstoffe sind insbesondere Ethylbenzol, Xylol, Diethylbenzol oder deren Gemische, wobei vorzugsweise Ethylbenzol verwendet wird. Die Lösungsmittel werden bevorzugt im Bereich von 1:1 bis 10:1 Gewichtsteilen, bezogen auf das monomere Phenol, eingesetzt, die Temperatur liegt bevorzugt zwischen 15 und $20^\circ C$.

Die mit der Erfindung erzielten Vorteile bestehen insbesondere darin, daß man ein Polymerisat mit hoher Intrinsic-Viskosität bei Verwendung von Rohmonomeren erhält. Bei dieser Polymerisationstechnik wird außerdem das Polymere in Ausbeuten von größer als 90 Gewichtsprozent, bezogen auf das eingesetzte Monomer, erhalten.

Wird z.B. das oben angegebene Rohprodukt aus 2,6-Dimethylphenol unter vergleichbaren Bedingungen eingesetzt, aber lediglich Toluol gegen Ethylbenzol ausgetauscht, so wird ein Polymeres mit einer Intinsic-Viskosität $[\eta]$ von 0,806 dl/g erhalten. Bei Verwendung von Xylol ist $[\eta]$ = 0,78 dl/g.

Dieses Verhalten beweist, daß der Übergang zu anderen aromatischen Lösungsmitteln, statt Toluol z.B. Xylol oder vorzugsweise Ethylbenzol, unerwartet vorteilhaft ist und den Einsatz von Rohprodukten aus 2,6-Dimethylphenol erlaubt.

In den Beispielen wird gezeigt, daß neben dem erfindungsgemäßen Vorteil der höheren Intinsic-Viskosität des Polymeren auch den Vorteil der kürzeren Polymerisationszeit, sowie eine deutliche Absenkung von Verunreinigungen wie Tetramethyldiphenochinon auftritt.

## Beispiel 1

Herstellung von Poly(2,6-dimethyl-1,4-phenylen)-äther

Zu einer Vorlage von 1,3 g Cu-I-Bromid und 33 g Di-n-butylamin werden 2 g 2,6-Dimethylphenol gegeben und bei 20°C 5 Minuten unter Einleiten von Sauerstoff gerührt, dann wird im Verlauf von 30 Minuten eine Lösung von 204 g 2,6-Dimethylphenol in 1 400 ml Ethylbenzol eindosiert, anschließend wird noch 1 Stunde bei 20°C gerührt. Die Reaktion wird in Gegenwart von 30 Liter/Stunde Sauerstoff durchgeführt.

Nach Beendigung der Reaktion wird das Polymerisat mit 10 l Methanol gefällt. Das erhaltene Polymerisat hat nach dem Trocknen eine Intrinsic Viskosität $[\eta]$ von 0,8 dl/g. Die Ausbeute an Polymeren lag bei > 90 % (bezogen auf das eingesetzte Monomere). Analyse: Cu-Gehalt: 4 ppm; N-Gehalt: 0,1 Gew.%.

## Beispiel 2

Wird wie im Beispiel 1 beschrieben gearbeitet, jedoch Art und Menge der Katalysatoren variiert, so werden die in der folgenden Tabelle wiedergegebenen Resultate erhalten.

| Beispiel Nr. | Cu-Salz wasserfrei | g | Lösungs mittel | Amin Art und Menge in g | | dl/g $[\eta]$ |
|---|---|---|---|---|---|---|
| 2 | Cu-I-Br | 1,3 | Ethylbenzol | Oktylamin | 33 | 0,78 |
| 3 | Cu-I-Br | 1,3 | Xylol | Ethylhexylamin | 33 | 0,72 |
| 4 | Cu-I-Br | 1,3 | Xylol | Ethylhexylamin | 25 | 0,74 |
| 5 | Cu-I-Br | 1,3 | Xylol | Ethylhexylamin | 25 | 0,71 |
| 6 | Cu-I-Br | 1,3 | Xylol | Ethylhexylamin | 33 | 0,68 |
| 7 | Cu-I-Cl | 1,3 | Ethylbenzol | Dibutylamin | 33 | 0,75 |
| 8 | Cu-I-J | 1,3 | Ethylbenzol | Dibutylamin | 33 | 0,76 |
| 9 | Cu-I-Br | 2,6 | Ethylbenzol | Dibutylamin | 33 | 0,74 |
| 10 | Cu-I-Br | 2,6 | Ethylbenzol | Dibutylamin | 49 | 0,76 |
| 11 | Cu-II-Br | 1,3 | Ethylbenzol | Dibutylamin | 33 | 0,75 |
| 12 | Cu-II-Br (wasserhaltig) | 1,3 | Ethylbenzol | Dibutylamin | 33 | 0,15 |
| 13 | Cu-II-Azetat | 1,5 | Ethylbenzol | Picolin | 25 | 0,57 |
| 14 | Cu-II-Propionat | 1,5 | Ethylbenzol | Picolin | 25 | 0,60 |
| 15 | Cu-I-Acetessigester | 1,5 | Ethylbenzol | Picolin | 25 | 0,76 |
| 16 | Cu-II-Acetyl-acetonat | 1,5 | Ethylbenzol | Picolin | 25 | 0,70 |
| 17 | Cu-I-Br | 1,3 | Ethylbenzol | Dibutylamin | 33 | 0,81 |
| 18 | Cu-I-Br | 1,3 | Xylol | Dibutylamin | 37 | 0,78 |

Bei allen Versuchen betrug die Gesamtreaktionszeit 1 1/2 Stunden,
beim Versuch 6 dagegen nur 1 Stunde.

Patentansprüche

1. Verfahren zur Herstellung hochmolekularer Polyphenylenäther aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators, dadurch gekennzeichnet, daß als Lösungsmittel ein aromatischer $C_8$- bis $C_{10}$-Kohlenwasserstoff verwendet wird.

2. Verfahren nach Anspruch 1, dadurch gekennzeichnet, daß das Lösungsmittel Ethylbenzol ist.

# EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 2 160 419 (MITSUBISHI GAS CHEMICAL CO., INC.) <br> * Anspruch 2; Beispiele 12 bis 23; Spalte 2, Zeilen 64 bis 66; Spalte 3, Zeile 65 * <br> -- | 1 |
| X | DE - A1 - 2 460 326 (GENERAL ELECTRIC CO.) <br> * Beispiel 1; Seite 6, Zeile 28 * <br> -- | 1 |
| A | B. VOLLMERT "Grundriß der Makromolekularen Chemie" <br> 1962, SPRINGER-VERLAG, Berlin-Göttingen-Heidelberg <br> * Seite 71, Abb. 71 * <br> ---- | |

**KLASSIFIKATION DER ANMELDUNG (Int. Cl.³)**

C 08 G 65/44

**RECHERCHIERTE SACHGEBIETE (Int. Cl.³)**

C 08 G 65/44

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 09-11-1981 | WIBMER |

EPA form 1503.1 06.78